# EUROPEAN PATENT SPECIFICATION

(11) **EP 3 165 360 B1**
(45) Date of publication and mention of the grant of the patent: **08.05.2019**
(21) Application number: 15822304.0
(22) Date of filing: 13.07.2015
(51) Int. Cl.: B32B 25/14, B32B 1/08, B32B 27/30, F16L 11/04

(54) **LAMINATE**
LAMINAT
CORPS STRATIFIÉ

(30) Priority: 18.07.2014 JP 2014147812
(43) Date of publication of application: 10.05.2017
(73) Proprietor: Zeon Corporation, Tokyo 100-8246 (JP); Daikin Industries, Ltd., Osaka-shi, Osaka 530-8323 (JP)
(72) Inventor: EMORI, Nobuyoshi, Tokyo 100-8246 (JP); ARAKAWA, Takanori, Tokyo 100-8246 (JP); TAKEMURA, Kouhei, Osaka-shi Osaka 530-8323 (JP); IRIE, Sadashige, Osaka-shi Osaka 530-8323 (JP)
(74) Representative: Hoffmann Eitle
(86) International application number: PCT/JP2015/070034
(87) International publication number: WO 2016/009990

(56) References cited:
- EP-A1- 1 795 341
- WO-A1-2011/155236
- WO-A1-2014/073489
- JP-A- S61 242 840
- JP-A- 2006 213 874
- JP-A- 2009 255 071
- JP-A- 2012 187 852
- JP-A- 2012 516 360
- JP-A- 2013 208 758
- US-A- 5 981 423
- US-A1- 2007 282 048
- US-A1- 2011 021 690
- Drobny, Jiri George et al.: "Fluoroelastomers Handbook : The Definitive User's Guide", 1 January 2005 (2005-01-01), Elsevier Science, XP002776125, ISBN: 9780815515173 * page 79, column 1, line 1 - line 5 * * end of second paragraph; page 103, column 2 *

## Description

### TECHNICAL FIELD

The present invention relates to laminates.

### BACKGROUND ART

Fluororubbers show excellent chemical resistance, solvent resistance, and heat resistance, and are thus widely used in various fields such as the automobile industry, the semiconductor industry, and the chemical industry. In the automobile industry, for example, fluororubbers are used for hoses and sealants of engines and their peripherals, of AT systems, and of fuel systems and their peripherals.

Although fluororubbers show excellent properties as mentioned above, they are much more expensive than common rubber materials. Thus, production of hoses or other parts from fluororubber alone costs high.

This situation led to a known technique in which hoses and sealants are not formed from fluororubber alone but formed from a laminate of a fluororubber layer and another rubber layer. Still, fluororubbers are difficult to bond to other rubber. Thus, various techniques are proposed so as to improve the adhesiveness.

Patent Literature 1 discloses that, in production of a laminate of a fluororubber layer and an unsaturated nitrile-conjugated diene-based copolymer layer, a hydrogenated unsaturated nitrile-conjugated diene-based copolymer layer, or an epichlorohydrin rubber layer, a composition containing an organophosphonium salt or an organoammonium salt is advantageously used as an additive to be added to the unsaturated nitrile-conjugated diene-based copolymer layer, the hydrogenated unsaturated nitrile-conjugated diene-based copolymer layer, or the epichlorohydrin rubber layer and to improve the vulcanization adhesion of such layers to the fluororubber layer.

Patent literature 2 relates to a laminate comprising a fluororubber layer and an acrylic rubber layer.

### CITATION LIST

### - Patent Literature

Patent Literature 1: JP H09-316238 A
Patent literature 2: EP 1 795 341 A1

### SUMMARY OF INVENTION

### - Technical Problem

Although there have been known laminates including a fluororubber layer and an acrylic rubber layer bonded to each other, no combination of a fluororubber layer and an acrylic rubber layer has been known in which the layers are firmly bonded to each other even at high temperatures. Thus, the present invention aims to provide a laminate including a fluororubber layer and an acrylic rubber layer which are firmly bonded to each other and are not separated even at high temperatures.

### - Solution to Problem

The inventors have performed studies to find that a fluororubber layer and an acrylic rubber layer can be firmly bonded to each other only when a fluororubber composition for forming the fluororubber layer has a polyol-crosslinkable structure and the fluororubber has a specific acid value and contains a specific crosslinking accelerator.

Specifically, the present invention relates to a laminate including a fluororubber layer and an acrylic rubber layer, the fluororubber layer is a crosslinked product of a fluororubber composition containing a fluororubber that contains a polyol-crosslinkable vinylidene fluoride unit, a polyol crosslinker, and a crosslinking accelerator, the crosslinking accelerator being a quaternary phosphonium salt free from a chlorine atom, the fluororubber having an acid value of 0.20 KOHmg/g or higher.

The crosslinking accelerator is preferably a quaternary phosphonium salt of 2,2-bis(4-hydroxyphenyl)hexafluoropropane.

The polyol crosslinker is preferably 2,2-bis(4-hydroxyphenyl)hexafluoropropane.

The acrylic rubber layer is preferably formed from an acrylic rubber composition containing an acrylic rubber and an amine crosslinker.

The acrylic rubber preferably contains a carboxyl group.

The amine crosslinker is preferably hexamethylene diamine carbamate.

The laminate of the present invention preferably serves as a turbocharger hose, an intercooler hose, an air duct hose, an air intake hose, an emission control hose, a vacuum hose, or a positive crankcase ventilation hose.

### - Advantageous Effects of Invention

Since the laminate of the present invention has the aforementioned configuration, the fluororubber layer and the acrylic rubber layer are firmly bonded to each other and are not separated even at high temperatures.

### DESCRIPTION OF EMBODIMENTS

The laminate of the present invention includes a fluororubber layer and an acrylic rubber layer. The following will describe the components of the laminate of the present invention.

### (Fluororubber layer)

The fluororubber layer is formed from a fluororubber composition containing a fluororubber having a polyol-crosslinkable vinylidene fluoride (VdF) unit, a polyol crosslinker, and a crosslinking accelerator. The fluororubber layer is usually obtainable by molding and crosslinking the fluororubber composition.

The fluororubber is a fluororubber having a polyol-crosslinkable VdF unit. The fluororubber is usually formed from an amorphous polymer which contains a fluorine atom bonding to a carbon atom constituting the main chain and has rubber elasticity.

The fluororubber has an acid value of 0.20 KOHmg/g or higher. The fluororubber having an acid value within the above specific range enables firm bonding of the fluororubber layer and the acrylic rubber layer. There have been no studies on bonding of fluororubber and acrylic rubber focusing on the acid value of the fluororubber. Surprisingly, however, the studies on the acid value of fluororubber performed by the present inventors revealed that the acid value of fluororubber contributes to the adhesiveness to acrylic rubber. Thereby, the present invention was completed. The acid value of the fluororubber is more preferably 0.25 KOHmg/g or higher. The upper limit of the acid value of the fluororubber may be 2.0 KOHmg/g, for example.

The acid value is determined by the potentiometric titration in conformity with JIS K0070 except that a 0.01 mol/L solution of potassium hydroxide in ethanol is used instead of a 0.1 mol/L solution of potassium hydroxide in ethanol.

The fluororubber is preferably a fluororubber having a fluorine content of 64 mass% or more, more preferably a fluororubber having a fluorine content of 66 mass% or more. The upper limit of the fluorine content may be any value, and is preferably 74 mass% or less. The fluororubber having a fluorine content of less than 64 mass% tends to cause poor chemical resistance, fuel oil resistance, and fuel permeability. The fluorine content can be determined by calculation from the polymer composition.

The fluororubber is preferably a copolymer including a VdF unit and a copolymerized unit derived from a second comonomer.

The fluororubber preferably satisfies that the amount of the VdF unit is 20 mol% or more, more preferably 45 mol% or more, still more preferably 55 mol% or more, relative to the sum of the moles of the VdF unit and the polymerized unit derived from a second comonomer. The amount of the VdF unit is also preferably 85 mol% or less, more preferably 80 mol% or less, relative to the sum of the moles of the VdF unit and the polymerized unit derived from a second comonomer.

The fluororubber preferably satisfies that the amount of the polymerized unit derived from a second comonomer is 15 mol% or more, more preferably 20 mol% or more, relative to the sum of the moles of the VdF unit and the polymerized unit derived from a second comonomer. The amount of the polymerized unit derived from a second comonomer is also preferably 80 mol% or less, more preferably 55 mol% or less, still more preferably 45 mol% or less, relative to the sum of the moles of the VdF unit and the polymerized unit derived from a second comonomer.

The second comonomer may be any comonomer copolymerizable with VdF, and examples thereof include fluorine-containing monomers such as tetrafluoroethylene (TFE), hexafluoropropylene (HFP), perfluoro(alkyl vinyl ethers) (PAVEs), chlorotrifluoroethylene (CTFE), trifluoroethylene, trifluoropropylene, tetrafluoropropylene, pentafluoropropylene, trifluorobutene, tetrafluoroisobutene, hexafluoroisobutene, and vinyl fluoride; and fluorine-free monomers such as ethylene (Et), propylene (Pr), and alkyl vinyl ethers. One of these monomers and compounds may be used alone or two or more thereof may be used in combination.

Examples of the PAVEs include perfluoro(methyl vinyl ether) (PMVE), perfluoro(ethyl vinyl ether) (PEVE), and perfluoro(propyl vinyl ether) (PPVE).

The fluororubber is preferably a copolymer containing a VdF unit and a copolymerized unit derived from a fluorine-containing monomer excluding VdF. The fluororubber also preferably contains a copolymerized unit derived from a monomer copolymerizable with VdF and the fluorine-containing monomer.

Examples of the fluororubber include VdF/HFP copolymers, VdF/TFE/HFP copolymers, VdF/CTFE copolymers, VdF/CTFE/TFE copolymers, VdF/PAVE copolymers, VdF/TFE/PAVE copolymers, VdF/HFP/PAVE copolymers, VdF/HFP/TFE/PAVE copolymers, VdF/TFE/Pr copolymers, and VdF/Et/HFP copolymers.

For firmer bonding of the fluororubber layer and the acrylic rubber layer, better heat resistance, better compression set, better processability, and lower cost, preferred among these is at least one selected from the group consisting of VdF/HFP copolymers, VdF/TFE/HFP copolymers, VdF/PAVE copolymers, VdF/TFE/PAVE copolymers, VdF/HFP/PAVE copolymers, and VdF/HFP/TFE/PAVE copolymers.

The VdF/HFP copolymers preferably have a VdF/HFP ratio of (45 to 85)/(55 to 15) (mol%), more preferably (50 to 80)/(50 to 20) (mol%), still more preferably (60 to 80)/(40 to 20) (mol%).

The VdF/TFE/HFP copolymers preferably have a VdF/TFE/HFP ratio of (30 to 80)/(4 to 35)/(10 to 35) (mol%), more preferably (45 to 80)/(5 to 20)/(15 to 35) (mol%).

The VdF/PAVE copolymers preferably have a VdF/PAVE ratio of (65 to 90)/(35 to 10) (mol%).

The VdF/TFE/PAVE copolymers preferably have a VdF/TFE/PAVE ratio of (40 to 80)/(3 to 40)/(15 to 35) (mol%).

The VdF/HFP/PAVE copolymers preferably have a VdF/HFP/PAVE ratio of (65 to 90)/(3 to 25)/(3 to 25) (mol%).

The VdF/HFP/TFE/PAVE copolymers preferably have a VdF/HFP/TFE/PAVE ratio of (40 to 90)/(0 to 25)/(0 to 40)/(3 to 35) (mol%), more preferably (40 to 80)/(3 to 25)/(3 to 40)/(3 to 25) (mol%).

For firmer bonding of the fluororubber layer and the acrylic rubber layer, better heat resistance, better compression set, better processability, and lower cost, the fluororubber is still more preferably at least one selected from the group consisting of VdF/HFP copolymers and VdF/TFE/HFP copolymers.

Not only one of the above fluororubbers but also two or more thereof may be used.

For firmer bonding of the fluororubber layer and the acrylic rubber layer, a lower compression set of the fluororubber after vulcanization, and excellent moldability, the polyol crosslinker is preferably a polyhydroxy compound. For excellent heat resistance, a polyhydroxy aromatic compound is particularly preferred. The polyhydroxy aromatic compound may be any compound, and examples thereof include 2,2-bis(4-hydroxyphenyl)propane (hereinafter, referred to as bisphenol A), 2,2-bis(4-hydroxyphenyl)hexafluoropropane (bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxy stilbene, 2,6-dihydroxy anthracene, hydroquinone, catechol, 2,2-bis(4-hydroxyphenyl)butane (hereinafter, referred to as bisphenol B), 4,4-bis(4-hydroxyphenyl)valeric acid, 2,2-bis(4-hydroxyphenyl)tetrafluorodichloropropane, 4,4'-dihydroxydiphenyl sulfone, 4,4'-dihydroxydiphenyl ketone, tri(4-hydroxyphenyl)methane, 3,3',5,5'-tetrachlorobisphenol A, and 3,3',5,5'-tetrabromobisphenol A. These polyhydroxy aromatic compounds each may be in the form of an alkali metal salt or an alkaline earth metal salt. If the copolymer is prepared by acid coagulation, metal salts of the above compounds are preferably not used.

For firmer bonding of the fluororubber layer and the acrylic rubber layer, the polyol crosslinker is particularly preferably 2,2-bis(4-hydroxyphenyl)hexafluoropropane (bisphenol AF).

For firmer bonding of the fluororubber layer and the acrylic rubber layer, the fluororubber composition preferably satisfies that the amount of the polyol crosslinker is 0.2 to 10 parts by mass, more preferably 0.5 to 6 parts by mass, still more preferably 1 to 4 parts by mass, relative to 100 parts by mass of the fluororubber.

Less than 0.2 parts by mass of the polyol crosslinker tends to cause a low crosslinking density and a high compression set. More than 10 parts by mass thereof tends to cause too high a crosslinking density, likely causing cracking of the composition upon compression.

The crosslinking accelerator is a quaternary phosphonium salt free from a chlorine atom. Since the fluororubber layer is formed from a fluororubber composition containing a quaternary phosphonium salt free from a chlorine atom, the fluororubber layer and the acrylic rubber layer are firmly bonded to each other. Further, these layers are not separated even at high temperatures. Such a quaternary phosphonium salt is preferably a quaternary phosphonium salt of 2,2-bis(4-hydroxyphenyl)hexafluoropropane (bisphenol AF).

The quaternary phosphonium salt of bisphenol AF is preferably at least one selected from the group consisting of a tetraphenyl phosphonium salt of bisphenol AF, a benzyl triphenyl phosphonium salt of bisphenol AF, a 1-(propan-2-on-yl)-triphenyl phosphonium salt of bisphenol AF, an (ethoxycarbonylmethyl)triphenyl phosphonium salt of bisphenol AF, an allyl triphenyl phosphonium salt of bisphenol AF, a tetramethyl phosphonium salt of bisphenol AF, and a tetraethyl phosphonium salt of bisphenol AF. For further improvement of the adhesiveness between the fluororubber layer and the acrylic rubber layer, a benzyl triphenyl phosphonium salt of bisphenol AF is particularly preferred.

Such quaternary phosphonium salts can be produced by the method disclosed in JP 2013-221024 A or JP H11-147891 A, for example.

The amount of the crosslinking accelerator in the fluororubber composition is preferably such that the amount of quaternary phosphonium ions is 0.2 to 5 parts by mass, more preferably 0.2 to 3 parts by mass, particularly preferably 0.3 to 2 parts by mass, relative to 100 parts by mass of the fluororubber.

Blending the crosslinking accelerator in an amount within the above range enables firmer bonding of the fluororubber layer and the acrylic rubber layer.

In the fluororubber composition, the polyol crosslinker and the crosslinking accelerator may be blended as a solid solution of the polyol crosslinker and the crosslinking accelerator. Such a solid solution may be obtainable by the method disclosed in JP 2013-221024 A or JP H11-147891 A, for example.

The fluororubber composition may further contain an onium compound excluding the quaternary phosphonium salts free from a chlorine atom. Examples of the onium compound include ammonium compounds such as quaternary ammonium salts, phosphonium compounds such as quaternary phosphonium salts (excluding quaternary phosphonium salts free from a chlorine atom), oxonium compounds, sulfonium compounds, cyclic amines, and monofunctional amine compounds.

The onium compound is preferably a quaternary ammonium salt. Examples of the quaternary ammonium salt include 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methyl sulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5.4.0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter, referred to as DBU-B), 8-benzyl-1,8-diazabicyclo[5.4.0]-7-undecenium hydroxide, 8-phenethyl-1,8-diazabicyclo[5.4.0]-7-undecenium chloride, and 8-(3-phenylpropyl)-1,8-diazabicyclo[5.4.0]-7-undecenium chloride. Preferred is DBU-B.

The fluororubber composition preferably satisfies that the amount of the onium compound (excluding quaternary phosphonium salts free from a chlorine atom) is 0.1 to 3.0 parts by mass relative to 100 parts by mass of the fluororubber.

The fluororubber composition may contain, as an acid acceptor, at least one compound selected from the group consisting of metal oxides, metal hydroxides, weak acid salts of alkali metals, and weak acid salts of alkaline earth metals.

Examples of the metal oxides, metal hydroxides, weak acid salts of alkali metals, and weak acid salts of alkaline earth metals include oxides, hydroxides, carbonates, carboxylates, silicates, borates, and phosphonates of any metal in the group II of the Periodic table, and oxides, basic carbonates, basic carboxylates, basic phosphonates, and basic sulfites of any metal in the group IV of the Periodic table.

Specific examples of the metal oxides, metal hydroxides, weak acid salts of alkali metals, and weak acid salts of alkaline earth metals include magnesium oxide, magnesium hydroxide, barium hydroxide, magnesium carbonate, barium carbonate, calcium oxide (quicklime), calcium hydroxide (slaked lime), calcium carbonate, calcium silicate, calcium stearate, zinc stearate, calcium phthalate, calcium phosphite, tin oxide, and basic tin phosphonate.

The amount of the metal oxides, metal hydroxides, weak acid salts of alkali metals, and weak acid salts of alkaline earth metals is preferably 20 parts by mass or less, more preferably 15 parts by mass or less, relative to 100 parts by mass of the fluororubber. The lower limit of the amount thereof may be any value, and may be 0 parts by mass or may be 0.1 parts by mass.

In order to improve the acid resistance, the fluororubber composition preferably contains at least one compound selected from the group consisting of metal oxides, weak acid salts of alkali metals, and weak acid salts of alkaline earth metals, particularly preferably magnesium oxide.

In order to improve the acid resistance and the crosslinking rate, the fluororubber composition preferably contains an alkali metal silicate. The presence of an alkali metal silicate enables polyol-crosslinking without mixing calcium hydroxide in a period of time similar to that achieved in conventional cases of mixing calcium hydroxide. Further, containing an alkali metal silicate eliminates the need of mixing calcium hydroxide for increasing the crosslinking rate, which reduces the degree of deterioration and swelling of the fluororubber layer due to contact with chemicals, solvents (especially, acidic solvents), fuels (especially, biomass fuels), and the like. Further, improvement of the compression set is expected.

Examples of the alkali metal silicate include sodium silicate, potassium silicate, lithium silicate, and hydrated salts thereof.

If the alkali metal silicate is sodium silicate or a hydrated salt thereof, the composition of the sodium silicate or a hydrated salt thereof is expressed as a mass ratio (%) in terms of Na₂O, SiO₂, and H₂O. Preferably, the proportion of Na₂O is 0.5 to 95 mass%, the proportion of SiO₂ is 5 to 99 mass%, and the proportion of H₂O is 0 to 94.5 mass%. For excellent effect of increasing the crosslinking rate, preferably, the proportion of Na₂O is 1 to 85 mass%, the proportion of SiO₂ is 2.0 to 95 mass%, and the proportion of H₂O is 0 to 85 mass%. For excellent processability, preferably, the proportion of Na₂O is 2 to 70 mass%, the proportion of SiO₂ is 7.0 to 70 mass%, and the proportion of H₂O is 0 to 75 mass%.

The sodium silicate or a hydrated salt thereof may be available as any of sodium silicates No. 1 to No. 5 (Fuji Kagaku Corp.), sodium metasilicate pentahydrate or nonahydrate (Fuji Kagaku Corp.), sodium orthosilicate (65% or 80%) (Osaka Keisou Co., Ltd.), any of sodium silicate powders No. 1 to No. 3 (Nippon Chemical Industrial Co., Ltd.), or sodium metasilicate, anhydrous (Osaka Keisou Co., Ltd.).

If the alkali metal silicate is a hydrated salt of potassium silicate, the composition of the hydrated salt of potassium silicate is expressed as a mass ratio (%) in terms of K₂O, SiO₂, and H₂O. Preferably, the proportion of K₂O is 5 to 30 mass%, the proportion of SiO₂ is 15 to 35 mass%, and the proportion of H₂O is 35 to 80 mass%.

The hydrated salt of potassium silicate may be available as potassium silicate No. 1 or potassium silicate No. 2 (Fuji Kagaku Corp.).

If the alkali metal silicate is a hydrated salt of lithium silicate, the composition of the hydrated salt of lithium silicate is expressed as a mass ratio (%) in terms of Li₂O, SiO₂, and H₂O. Preferably, the proportion of Li₂O is 0.5 to 10 mass%, the proportion of SiO₂ is 15 to 25 mass%, and the proportion of H₂O is 65 to 84.5 mass%.

The hydrated salt of lithium silicate may be available as lithium silicate 45 (Nippon Chemical Industrial Co., Ltd.).

In order to achieve a stable crosslinking rate and excellent fuel resistance, sodium silicate or a hydrated salt thereof is preferred.

The amount of the alkali metal silicate is preferably 0.1 to 10 parts by mass, more preferably 0.2 to 7 parts by mass, relative to 100 parts by mass of the fluororubber.

Combination use of calcium hydroxide and an alkali metal silicate in the fluororubber composition is not necessarily eliminated. Still, the amount of the calcium hydroxide used in combination needs to be limited to the amount that has no influence on the merits and effects achieved by the alkali metal silicate. The amount of the calcium hydroxide needs to be smaller than the amount of the alkali metal silicate contained in the fluororubber composition, and is specifically 3 parts by mass or less, or further 1 parts by mass or less, relative to 100 parts by mass of the fluororubber. Particularly preferably, the fluororubber composition contains substantially no calcium hydroxide.

In view of the adhesiveness, the fluororubber composition preferably contains carbon black. Examples of the carbon black include furnace black, acetylene black, thermal black, channel black, and graphite. Specific examples thereof include SAF-HS (N₂SA: 142 m²/g, DBP: 130 ml/100 g), SAF (N₂SA: 142 m²/g, DBP: 115 ml/100 g), N234 (N₂SA: 126 m²/g, DBP: 125 ml/100 g), ISAF (N₂SA: 119 m²/g, DBP: 114 ml/100 g), ISAF-LS (N₂SA: 106 m²/g, DBP: 75 ml/100 g), ISAF-HS (N₂SA: 99 m²/g, DBP: 129 ml/100 g), N339 (N₂SA: 93 m²/g, DBP: 119 ml/100 g), HAF-LS (N₂SA: 84 m²/g, DBP: 75 ml/100 g), HAS-HS (N₂SA: 82 m²/g, DBP: 126 ml/100 g), HAF (N₂SA: 79 m²/g, DBP: 101 ml/100 g), N351 (N₂SA: 74 m²/g, DBP: 127 ml/100 g), LI-HAF (N₂SA: 74 m²/g, DBP: 101 ml/100 g), MAF-HS (N₂SA: 56 m²/g, DBP: 158 ml/100 g), MAF (N₂SA: 49 m²/g, DBP: 133 ml/100 g), FEF-HS (N₂SA: 42 m²/g, DBP: 160 ml/100 g), FEF (N₂SA: 42 m²/g, DBP: 115 ml/100 g), SRF-HS (N₂SA: 32 m²/g, DBP: 140 ml/100 g), SRF-HS (N₂SA: 29 m²/g, DBP: 152 ml/100 g), GPF (N₂SA: 27 m²/g, DBP: 87 ml/100 g), SRF (N₂SA: 27 m²/g, DBP: 68 ml/100 g), SRF-LS (N₂SA: 23 m²/g, DBP: 51 ml/100 g), FT (N₂SA: 19 m²/g, DBP: 42 ml/100 g), and MT (N₂SA: 8 m²/g, DBP: 43 ml/100 g). These carbon blacks may be used alone or in combination of two or more.

The fluororubber composition preferably satisfies that the amount of the carbon black is 0 to 50 parts by mass relative to 100 parts by mass of the fluororubber. Too large an amount of the carbon black tends to cause high hardness and poor flexibility of the resulting molded article, while too small an amount thereof may cause poor mechanical properties thereof. For good balance of the physical properties, the amount of the carbon black is more preferably 5 parts by mass or more, still more preferably 10 parts by mass or more, relative to 100 parts by mass of the fluororubber. For good balance of the physical properties, the amount thereof is more preferably 40 parts by mass or less, particularly preferably 30 parts by mass or less.

If necessary, the fluororubber composition may contain various additives usually blended into fluororubber compositions, if necessary, such as fillers, processing aids, plasticizers, colorants, stabilizers, adhesive aids, release agents, conductivity-imparting agents, thermal-conductivity-imparting agents, surface non-adhesive agents, flexibility-imparting agents, heat-resistance improvers, flame retarders, tackifiers, and multifunctional compounds. One or more usual crosslinkers and crosslinking accelerators different from those mentioned above may also be blended.

The fluororubber composition is obtainable by kneading a fluororubber, a polyol crosslinker, a crosslinking accelerator, and other optional additives as appropriate using a rubber kneader which is commonly used. Examples of the rubber kneader include rolls, kneaders, Banbury mixers, internal mixers, and twin-screw extruders.

### (Acrylic rubber layer)

The acrylic rubber layer is usually formed from an acrylic rubber composition containing an acrylic rubber and a crosslinker. The acrylic rubber layer is obtainable by molding and crosslinking the acrylic rubber composition.

The acrylic rubber is a rubber containing a (meth)acrylic acid ester monomer (this term means an acrylic acid ester monomer and/or a methacrylic acid ester monomer) unit in the polymer, and preferably contains the (meth)acrylic acid ester monomer unit in an amount of 85 mass% or more, particularly preferably 90 mass% or more, in all the monomer units of the polymer.

In order to provide a laminate including a fluororubber layer and an acrylic rubber layer which are firmly bonded to each other and are not separated even at high temperatures, the acrylic rubber particularly preferably contains a carboxyl group.

The acrylic rubber containing a carboxyl group is referred to as a "carboxyl group-containing acrylic rubber" hereinbelow.

The carboxyl group-containing acrylic rubber preferably contains a monomer unit having a carboxyl group as a part of the monomer units constituting the acrylic rubber, and the monomer unit having a carboxyl group is preferably contained in an amount of 0.5 to 5.0 mass%, more preferably 1.0 to 3.0 mass%, in all the monomer units of the polymer.

One example of a method of introducing a carboxyl group into the acrylic rubber is a method of copolymerizing a monomer having a carboxyl group with the (meth)acrylic acid ester monomer.

One example of commercially available products of the carboxyl group-containing acrylic rubber is HyTemp AR212HR (Zeon Chemicals L.P.).

The crosslinker may be appropriately selected in accordance with the type or other factors of the acrylic rubber, and any crosslinker usually used for crosslinking of acrylic rubbers may be used.

The acrylic rubber composition preferably satisfies that the amount of the crosslinker added is 0.05 to 20 parts by mass relative to 100 parts by mass of the acrylic rubber. The crosslinker in an amount within the above range enables sufficient crosslinking. Too small an amount of the crosslinker may cause insufficient crosslinking of the acrylic rubber composition, likely resulting in poor mechanical properties, such as tensile strength and elongation at break, of the resulting acrylic rubber layer. Too large an amount thereof may cause curing of the resulting crosslinked product, likely resulting in the loss of the elasticity thereof.

The crosslinker may be appropriately selected in accordance with the crosslinking system of the acrylic rubber. Examples thereof include amine crosslinkers, epoxy crosslinkers, and active chlorine crosslinkers. Amine crosslinkers are preferred.

If the acrylic rubber is a carboxyl group-containing acrylic rubber, the crosslinker is preferably an amine crosslinker. This enables firm bonding of the fluororubber layer and the acrylic rubber layer. In other words, the acrylic rubber layer is preferably formed from an acrylic rubber composition containing a carboxyl group-containing acrylic rubber and an amine crosslinker.

The amine crosslinker is preferably hexamethylene diamine carbamate.

The acrylic rubber composition may further contain an additive other than the crosslinker. Preferred examples of the additive include crosslinking accelerators (e.g., 1,3-di-o-tolylguanidine), processing aids (e.g., stearic acid), antioxidants (e.g., 4,4'-di-(α,α-dimethyl benzyl)diphenyl amine), photostabilizers, plasticizers, reinforcing materials, lubricants (e.g., ester wax), silane-coupling agents, tackfiers, lubricants, flame retarders, dust-proof agents, antistatics, colorants, and fillers (e.g., carbon black).

The acrylic rubber composition may be prepared by kneading the acrylic rubber, the crosslinker, and other optional additives if necessary.

The composition may be prepared by any method. For example, the composition may be prepared by kneading the components of the resulting acrylic rubber composition other than a crosslinker and thermally unstable components such as a crosslinking aid at preferably 10°C to 200°C, more preferably 20°C to 170°C, using a mixer such as a Banbury mixer, a Brabender mixer, an internal mixer, or a kneader, then transferring the kneaded matter to a device such as a roll, adding the crosslinker and the thermally unstable components such as the crosslinking aid, and secondary kneading the components at preferably 10°C to 80°C.

In order to provide low-temperature characteristics, chemical resistance, and flexibility despite a simple structure and low cost, one preferred embodiment of the laminate of the present invention is a bilayer structure of a fluororubber layer and an acrylic rubber layer.

In order to reduce the cost and impart the flexibility, the laminate may be a laminate having three or more layers including a polymer layer (C) which is neither an acrylic rubber layer nor a fluororubber layer and is stacked on one side (the side where the acrylic rubber layer is not stacked) of the fluororubber layer, or may be a laminate having three or more layers including a polymer layer (C) which is neither an acrylic rubber layer nor a fluororubber layer and is stacked on one side (the side where the fluororubber layer is not stacked) of the acrylic rubber layer.

The laminate may be a laminate having three or more layers in which an acrylic rubber layer is stacked on both sides of a fluororubber layer, or may be a laminate having three or more layers in which a fluororubber layer is stacked on both sides of an acrylic rubber layer.

The polymer layer (C) may be any suitable layer and may be appropriately selected in accordance with the use of the laminate of the present invention. For example, the polymer layer (C) is preferably formed from an acrylonitrile-butadiene rubber or a hydrogenated product thereof.

The thicknesses and shapes of the respective layers may be appropriately selected in accordance with the purpose and mode of using the laminate.

In order to improve the pressure resistance, a reinforcing layer of reinforcing strings may be disposed as appropriate.

The laminate of the present invention preferably satisfies that the acrylic rubber layer and the fluororubber layer are crosslink-bonded to each other. Such crosslink-bonding enables very firm bonding of the fluororubber layer and the acrylic rubber layer.

The crosslink-bonded laminate is obtainable by crosslinking a non-crosslinked laminate including a non-crosslinked fluororubber layer and a non-crosslinked acrylic rubber layer stacked on the non-crosslinked fluororubber layer.

Examples of the crosslinking include steam crosslinking, press crosslinking, oven crosslinking, air-bath crosslinking, infrared crosslinking, microwave crosslinking, and lead-cover crosslinking. Heat-crosslinking is preferred. Crosslinking by heat enables sufficient crosslinking of the non-crosslinked acrylic rubber layer and the non-crosslinked fluororubber layer, enabling firm bonding of the fluororubber layer and the acrylic rubber layer in the resulting laminate.

The heat-crosslinking is performed under conditions which at least allow the acrylic rubber layer and the fluororubber layer to crosslink.

The heat-crosslinking is preferably performed at 150°C to 190°C for 5 to 120 minutes.

The heat-crosslinking may include primary crosslinking and second crosslinking. For example, preferably, primary crosslinking is performed at 150°C to 190°C for 5 to 120 minutes, and then second crosslinking is performed at 150°C to 200°C for 1 to 24 hours.

The laminate of the present invention may be produced by a method such as:
(1) a method including separately molding an acrylic rubber composition and a fluororubber composition, stacking the resulting acrylic rubber molded article and fluororubber molded article by means of, for example, compression to provide a non-crosslinked laminate in which the non-crosslinked fluororubber layer and the non-crosslinked acrylic rubber layer are stacked, and then crosslinking the non-crosslinked laminate;
(2) a method including simultaneously molding an acrylic rubber composition and a fluororubber composition to provide a non-crosslinked laminate in which the non-crosslinked fluororubber layer and the non-crosslinked acrylic rubber layer are stacked, and then crosslinking the non-crosslinked laminate;
(3) a method including molding an acrylic rubber composition, applying a fluororubber composition onto the resulting acrylic rubber molded article to provide a non-crosslinked laminate in which the non-crosslinked fluororubber layer and the non-crosslinked acrylic rubber layer are stacked, and then crosslinking the non-crosslinked laminate; or
(4) a method including molding a fluororubber composition, applying an acrylic rubber composition onto the resulting fluororubber molded article to provide a non-crosslinked laminate in which the non-crosslinked fluororubber layer and the non-crosslinked acrylic rubber layer are stacked, and then crosslinking the non-crosslinked laminate.

If the acrylic rubber composition and the fluororubber composition are separately molded, the acrylic rubber composition may be molded into any of various shapes such as a sheet or a tube by heat-compression molding, transfer molding, extrusion molding, injection molding, calender molding, or coating.

The fluororubber composition may be molded by heat-compression molding, melt extrusion molding, injection molding, or coating (including powder coating). The molding may be achieved using a usual molding device for fluororubbers, such as an injection molding device, a blow molding device, an extrusion molding device, or any coating device. Thereby, a molded article in any of various shapes such as a sheet or a tube can be produced. For excellent productivity, melt extrusion molding is preferred.

One example of the method of simultaneously molding and stacking the acrylic rubber composition and the fluororubber composition is a method of molding the acrylic rubber composition and the fluororubber composition into molded articles and simultaneously stacking them by, for example, multilayer compression molding, multilayer transfer molding, multilayer extrusion molding, multilayer injection molding, or doubling. This method is favorable because the method does not need a step of closely adhering a molded article obtainable from the acrylic rubber composition and a molded article obtainable from the fluororubber composition but can provide firm bonding in the later crosslinking.

More specifically, a crosslinked laminate is obtainable by simultaneously extruding a fluororubber composition and an acrylic rubber composition through an extruder into two or more layers, or extruding the compositions through two or more extruders such that an outer layer is disposed on an inner layer, to provide an integrated non-crosslinked laminate including the inner layer and the outer layer, and then heating the laminate to crosslink-bond the layers.

Since the laminate of the present invention has excellent adhesiveness, it can be suitably used as a hose. Since the laminate of the present invention has excellent adhesiveness, especially at high temperatures, it can be suitably used as a hose in the automobile field, particularly as a turbocharger hose, an intercooler hose, an air duct hose, an air intake hose, an emission control hose, a vacuum hose, or a positive crankcase ventilation (PCV) hose.

Although conventional turbocharger hoses suffer separation of layers at high temperatures, the laminate of the present invention has excellent adhesiveness at high temperatures and thus can be particularly suitably used as a turbocharger hose.

### EXAMPLES

The present invention will be described hereinbelow referring to, but not limited to, examples.

The methods of determining the values in the examples and comparative examples are described below.

The measured values described in the respective examples and comparative examples are values determined by the following methods.

### 1. Copolymer composition and fluorine content

The polymer composition was determined by ¹⁹F-NMR (AC300P, Bruker Corp.). The fluorine content was calculated from the polymer composition determined by ¹⁹F-NMR.

### 2. Acid value

The acid value was determined by potentiometric titration in conformity with JIS K0070 except that a 0.01 mol/L solution of potassium hydroxide in ethanol was used instead of a 0.1 mol/L solution of potassium hydroxide in ethanol.

### 3. Peel test (peeling strength and adhesion ratio)

A specimen was cut out of the laminate obtained in each of the examples and comparative examples, and subjected to the 180° peel test at a peeling rate of 50 mm/min using Tensilon RTG-1310 (A&D Co., Ltd.). The test temperatures were 23°C and 150°C. A constant-temperature tank was used for 150°C. The specimen was 25.4 mm in width, and the peeling strength was expressed by N/cm.

The peeled surface was visually observed, and the ratio of a rough area on the peeled surface was defined as the "adhesion ratio (%)".

For example, "adhesion ratio = 100%" means that the entire peeled surface adhered to the opposite material and that the material does not reach material failure but the peeled surface is rough. If the adhesion is stronger, the material is broken. The phrase "FKM breakage" in Table 3 means that the fluororubber layer is led to material failure in the peel test.

The materials shown in Tables 1 and 2 are as follows.
- FKM-A (VdF/HFP/TFE terpolymer, VdF/HFP/TFE = 77/17/6 (mol%), fluorine content: 66 mass%, acid value: 0.26 KOHmg/g, polyol-crosslinking system)
- FKM-B (VdF/HFP bipolymer, VdF/HFP = 78/22 (mol%), fluorine content: 66 mass%, acid value: 0.31 KOHmg/g, polyol-crosslinking system)
- FKM-C (VdF/HFP/TFE terpolymer, VdF/HFP/TFE = 58/22/20 (mol%), fluorine content: 69 mass%, acid value: 0.56 KOHmg/g, polyol-crosslinking system)
- FKM-D (VdF/HFP/TFE terpolymer, VdF/HFP/TFE = 50/30/20 (mol%), fluorine content: 70.5 mass%, acid value: 0.76 KOHmg/g, polyol-crosslinking system)
- FKM-E (VdF/HFP bipolymer, VdF/HFP =78/22 (mol%), fluorine content: 66 mass%, acid value: 0.08 KOHmg/g, polyol-crosslinking system)
- FKM-F (VdF/HFP bipolymer, VdF/HFP = 78/22 (mol%), fluorine content: 66 mass%, acid value: 0.19 KOHmg/g, polyol-crosslinking system)
- Bisphenol AF (trade name: BIS-AF, Central Glass Co., Ltd.)
- DBU-B (8-benzyl-1,8-diazabicyclo[5.4.0]-7-undecenium chloride, Wako Pure Chemical Industries, Ltd.)
- BTPPC (benzyl triphenyl phosphonium chloride, trade name: BTPPC, Tokyo Chemical Industry Co., Ltd.)
- BTPP+ (benzyl triphenyl phosphonium ion)
- BTPP salt of bisphenol AF (benzyl triphenyl phosphonium salt of bisphenol AF)
- N990 (thermal carbon black, trade name: MT-carbon, Cancarb)
- Ca(OH)₂ (calcium hydroxide, trade name: NICC 5000, Inoue Calcium Corp.)
- MgO (magnesium oxide, trade name: MA150, Kyowa Chemical Industry Co., Ltd.)
- Na metasilicate/nonahydrate (trade name: sodium metasilicate nonahydrate, Fuji Kagaku Corp.)

### (Production of non-crosslinked fluororubber sheet)

The materials shown in the following Table 1 or 2 were kneaded using an 8-inch open roll controlled to 30°C for 15 minutes. Thereby, a fluororubber composition was obtained. The resulting fluororubber composition in the form of a sheet was drawn out of the roll. Thereby, a non-crosslinked fluororubber sheet having a thickness of about 2.5 mm was obtained.

The crosslinking accelerator (BTPP salt of bisphenol AF) was blended in the form of a solid solution of bisphenol AF and BTPP+. The solid solution of bisphenol AF and BTPP+ can be produced by the method disclosed in JP 2013-221024 A or JP H11-147891 A.

### (Production of non-crosslinked acrylic rubber sheet)

First, 100 parts by mass of acrylic rubber (trade name: HyTemp AR212HR, Zeon Chemicals L.P.), 60 parts by mass of MAF carbon black (trade name: "SEAST 116", Tokai Carbon Co., Ltd., filler), 2 parts by mass of stearic acid, 1 part by mass of ester wax (trade name: "GLECK G-8205", DIC Corp., lubricant), and 2 parts by mass of 4,4'-di-(α,α-dimethyl benzyl)diphenyl amine (trade name: NOCRAC CD, Ouchi Shinko Chemical Industrial Co., Ltd., antioxidant) were mixed at 50°C for five minutes. Next, the resulting mixture was transferred to a 50°C roll. Then, 0.5 parts by mass of hexamethylene diamine carbamate (trade name: Diak #1, DuPont Performance Elastomers K.K., crosslinker) and 2 parts by mass of 1,3-di-o-tolylguanidine (trade name: Nocceler DT, Ouchi Shinko Chemical Industrial Co., Ltd., crosslinking accelerator) were blended and kneaded with the mixture. Thereby, an acrylic rubber composition was obtained.

The resulting acrylic rubber composition was molded using an open roll. Thereby, a non-crosslinked acrylic rubber sheet having a thickness of about 2.5 mm was obtained.

### (Examples 1 to 6 and Comparative Examples 1 to 7)

A laminate was produced by the following procedure, and the adhesiveness thereof was evaluated.

### (Production of laminate)

The non-crosslinked fluororubber sheet and the non-crosslinked acrylic rubber sheet were stacked and press-vulcanization-molded to achieve primary crosslinking, followed by secondary crosslinking using a heat oven. Thereby, a laminate of the fluororubber layer and the acrylic rubber layer crosslink-bonded to each other was produced. The conditions for the primary crosslinking and secondary crosslinking were as shown in Tables 3 and 4. With the resulting laminate, the adhesion test was performed.

**[Table 1]**

| Fluororubber layer | Example 1 | Example 2 | Example 3 | Example 4 | Example 5 | Example 6 |
|---|---|---|---|---|---|---|
| Fluororubber | FKM-A | FKM-B | FKM-C | FKM-C | FKM-A | FKM-B |
| Crosslinking system | Polyol system | Polyol system | Polyol system | Polyol system | Polyol system | Polyol system |
| Polymer composition | Terpolymer | Bipolymer | Terpolymer | Terpolymer | Terpolymer | Bipolymer |
| VdF/HFP/TFE ratio (mol%) | 77/17/6 | 78/22/0 | 58/22/20 | 58/22/20 | 77/17/6 | 78/22/0 |
| Fluorine content | 66% | 66% | 69% | 69% | 66% | 66% |
| Acid value (KOHmg/g) | 0.26 | 0.31 | 0.56 | 0.56 | 0.26 | 0.31 |
| Type of crosslinker | Bisphenol AF | Bisphenol AF | Bisphenol AF | Bisphenol AF | Bisphenol AF | Bisphenol AF |
| Type of crosslinking accelerator | BTPP salt of bisphenol AF | | DBU-B and BTPP salt of bisphenol AF | BTPP salt of bisphenol AF | | |

| Amount of fluororubber composition (parts by mass) | | | | | | |
|---|---|---|---|---|---|---|
| FKM-A | 100 | | | | 100 | |
| FKM-B | | 100 | | | | 100 |
| FKM-C | | | 100 | 100 | | |
| FKM-D | | | | | | |
| FKM-E | | | | | | |
| FKM-F | | | | | | |
| N990 (MT) | 20 | 20 | 20 | 20 | 20 | 20 |
| Ca(OH)₂ | 6 | 6 | 6 | | | |
| MgO | 3 | 3 | 3 | 3 | 3 | 3 |
| Na metasilicate/nonahydrate | | | | 1.2 | 12 | 12 |
| Bisphenol AF | 1.4 | 2.7 | 3.7 | 2.0 | 20 | 2.0 |
| DBU-B | | | 0.6 | | | |
| BTPPC | | | | | | |
| BTPP+ | 0.3 | 0.7 | 0.8 | 0.5 | 0.5 | 0.5 |

**[Table 2]**

| Fluororubber layer | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Fluororubber | FKM-A | FKM-A | FKM-B | FKM-B | FKM-D | FKM-E | FKM-F |
| Crosslinking system | Polyol system | Polyol system | Polyol system | Polyol system | Polyol system | Polyol system | Polyol system |
| Polymer composition | Terpolymer | Terpolymer | Bipolymer | Bipolymer | Terpolymer | Bipolymer | Bipolymer |
| VdF/HFP/TFE ratio (mol%) | 77/17/6 | 77/17/6 | 78/22/0 | 78/22/0 | 50/30/20 | 78/22/0 | 78/22/0 |
| Fluorine content | 66% | 66% | 66% | 66% | 70.5% | 66% | 66% |
| Acid value (KOHmg/g) | 0.26 | 0.26 | 0.31 | 0.31 | 0.76 | 0.08 | 0.19 |
| Type of crosslinker | Bisphenol AF | Bisphenol AF | Bisphenol AF | Bisphenol AF | Bisphenol AF | Bisphenol AF | Bisphenol AF |
| Type of crosslinking accelerator | DBU-B | BTPPC | DBU-B | BTPPC | DBU-B | BTPP salt of bisphenol AF | |

| Amount of fluororubber composition (parts by mass) | | | | | | | |
|---|---|---|---|---|---|---|---|
| FKM-A | 100 | 100 | | | | | |
| FKM-B | | | 100 | 100 | | | |
| FKM-C | | | | | | | |
| FKM-D | | | | | 100 | | |
| FKM-E | | | | | | 100 | |
| FKM-F | | | | | | | 100 |
| N990 (MT) | 20 | 20 | 20 | 20 | 20 | 20 | 20 |
| Ca(OH)₂ | 6 | 6 | 6 | 6 | 6 | 6 | 6 |
| MgO | 3 | 3 | 3 | 3 | 3 | 3 | 3 |
| Na metasilicate/nonahydrate | | | | | | | |
| Bisphenol AF | 1.8 | 22 | 1.0 | 2.2 | 22 | 2 | 2 |
| DBU-B | 0.4 | | 0.3 | | 0.6 | | |
| BTPPC | | 0.4 | | 0.4 | | | |
| BTPP+ | | | | | | 0.5 | 0.5 |

**[Table 3]**

| | Example 1 | Example 2 | Example 3 | Example 4 | Example 5 | Example 6 |
|---|---|---|---|---|---|---|
| Vulcanization adhesion conditions | | | | | | |
| Primary crosslinking | 160°C × 20 min | 170°C × 20 min | 160°C × 20 min | 170°C × 30 min | 160°C × 20 min | 160°C × 20 min |
| Secondary crosslinking | 170°C × 4 h | 170°C × 4 h | 170°C × 4 h | 170°C × 4h | 170°C × 4 h | 170°C × 4 h |

| Adhesion test (23°C atmosphere, peeling rate: 50 mm/min, peeling angle: 180°) | | | | | | |
|---|---|---|---|---|---|---|
| Peeling strength (N/cm) | 37.8 | 36.0 | 32.8 | 38.9 | 36.3 | 36.0 |
| Adhesion ratio (%) | 100 | 100 | 100 | 100 | 100 | 100 |

| Adhesion test (150°C atmosphere, peeling rate: 50 mm/min, peeling angle: 180°) | | | | | | |
|---|---|---|---|---|---|---|
| Peeling strength (N/cm) | 10.0 | | | | | |
| Adhesion ratio (%) | 100 | FKM breakage | FKM breakage | FKM breakage | FKM breakage | FKM breakage |

**[Table 4]**

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Vulcanization adhesion conditions | | | | | | | |
| Primary crosslinking | 160°C × 20 min | 160°C × 20 min | 160°C × 20 min | 160°C × 20 min | 160°C × 20 min | 160°C × 20 min | 160°C × 20 min |
| Secondary crosslinking | 170°C × 4 h | 170°C × 4 h | 170°C × 4 h | 170°C × 4 h | 170°C × 4 h | 170°C × 4 h | 170°C × 4 h |

| Adhesion test (23°C atmosphere, peeling rate: 50 mm/min, peeling angle: 180°) | | | | | | | |
|---|---|---|---|---|---|---|---|
| Peeling strength (N/cm) | 222 | 36.8 | 23.2 | 24.1 | 22.5 | 13.1 | 18.2 |
| Adhesion ratio (%) | 0 | 0 | 0 | 0 | 0 | 0 | 0 |

| Adhesion test (150°C atmosphere, peeling rate: 50 mm/min, peeling angle: 180°) | | | | | | | |
|---|---|---|---|---|---|---|---|
| Peeling strength (N/cm) | - | - | - | - | - | - | - |
| Adhesion ratio (%) | - | - | - | - | - | - | - |

## Claims

1. A laminate comprising:
a fluororubber layer; and
an acrylic rubber layer, wherein
the fluororubber layer is a crosslinked product of a fluororubber composition containing a fluororubber that contains a polyol-crosslinkable vinylidene fluoride unit, a polyol crosslinker, and a crosslinking accelerator,
the crosslinking accelerator being a quaternary phosphonium salt free from a chlorine atom,
the fluororubber having an acid value of 0.20 KOHmg/g or higher.

2. The laminate according to claim 1,
wherein the crosslinking accelerator is a quaternary phosphonium salt of 2,2-bis(4-hydroxyphenyl)hexafluoropropane.

3. The laminate according to claim 1 or 2,
wherein the polyol crosslinker is 2,2-bis(4-hydroxyphenyl)hexafluoropropane.

4. The laminate according to claim 1, 2, or 3,
wherein the acrylic rubber layer is formed from an acrylic rubber composition containing an acrylic rubber and an amine crosslinker.

5. The laminate according to claim 4,
wherein the acrylic rubber contains a carboxyl group.

6. The laminate according to claim 4 or 5,
wherein the amine crosslinker is hexamethylenediamine carbamate.

7. The laminate according to claim 1, 2, 3, 4, 5, or 6, which serves as a turbocharger hose, an intercooler hose, an air duct hose, an air intake hose, an emission control hose, a vacuum hose, or a positive crankcase ventilation hose.

## Patentansprüche

1. Laminat, umfassend:
eine Fluorkautschukschicht; und
eine Acrylkautschukschicht, wobei
die Fluorkautschukschicht ein vernetztes Produkt einer Fluorkautschukzusammensetzung, enthaltend einen Fluorkautschuk, der eine Polyol-vernetzbare Vinylidenfluorideinheit enthält, einen Polyol-Vernetzer und einen Vernetzungsbeschleuniger, ist,
wobei der Vernetzungsbeschleuniger ein quaternäres Phosphoniumsalz ist, das frei von einem Chloratom ist.
wobei der Fluorkautschuk eine Säurezahl von 0,20 KOHmg/g oder höher aufweist.

2. Laminat gemäß Anspruch 1,
wobei der Vernetzungsbeschleuniger ein quaternäres Phosphoniumsalz von 2,2-Bis(4-hydroxyphenyl)hexafluorpropan ist.

3. Laminat gemäß Anspruch 1 oder 2,
wobei der Polyolvernetzer 2,2-Bis(4-hydroxyphenyl)hexafluorpropan ist.

4. Laminat gemäß Anspruch 1, 2 oder 3,
wobei die Acrylkautschukschicht aus einer Acrylkautschukzusammensetzung gebildet wird, die einen Acrylkautschuk und einen Aminvernetzer enthält.

5. Laminat gemäß Anspruch 4,
wobei der Acrylkautschuk eine Carboxylgruppe enthält.

6. Laminat gemäß Anspruch 4 oder 5,
wobei der Aminvernetzer Hexamethylendiamincarbamat ist.

7. Laminat gemäß Anspruch 1, 2, 3, 4, 5 oder 6,
das als Turboladerschlauch, Zwischenkühlerschlauch, Luftleitungsschlauch, Lufteinlassschlauch, Emissionssteuerungsschlauch, Vakuumschlauch oder Kurbelgehäuseentlüftungsschlauch dient.

## Revendications

1. Stratifié comprenant :
une couche de caoutchouc fluoré; et
une couche de caoutchouc acrylique, dans lequel
la couche de caoutchouc fluoré est un produit réticulé d'une composition de caoutchouc fluoré contenant un caoutchouc fluoré qui contient une unité fluorure de vinylidène réticulable par un polyol, un agent de réticulation polyol, et un accélérateur de réticulation,
l'accélérateur de réticulation étant un sel phosphonium quaternaire exempt d'un atome de chlore,
le caoutchouc ayant une valeur d'acidité de 0,20 KOHmg/g ou supérieure.

2. Le stratifié selon la revendication 1,
dans lequel l'accélérateur de réticulation est un sel phosphonium quaternaire de 2,2-bis(4-hydroxyphényl)hexafluoropropane.

3. Le stratifié selon la revendication 1 ou 2,
dans lequel l'agent de réticulation polyol est le 2,2-bis(4-hydroxyphényl)hexafluoropropane.

4. Le stratifié selon la revendication 1, 2, ou 3,
dans lequel la couche de caoutchouc acrylique est formée à partir d'une composition de caoutchouc acrylique contenant un caoutchouc acrylique et un agent de réticulation amine.

5. Le stratifié selon la revendication 4,
dans lequel le caoutchouc acrylique contient un groupe carboxyle.

6. Le stratifié selon la revendication 4 ou 5,
dans lequel l'agent de réticulation amine est le carbamate de hexaméthylènediamine.

7. Le stratifié selon la revendication 1, 2, 3, 4, 5, ou 6, qui sert en tant qu'un tuyau de turbocompresseur, un tuyau de refroidisseur, un tuyau de conduite d'air, un tuyau d'entrée d'air, un tuyau de contrôle d'émission, un tuyau de vide, ou un tuyau de ventilation de carter positif.
